(19) **Europäisches Patentamt**
**European Patent Office**
**Office européen des brevets**

(11) Veröffentlichungsnummer: **0 279 159 B2**

(12) # NEUE EUROPÄISCHE PATENTSCHRIFT

(45) Veröffentlichungstag der neue Patentschrift:
**05.07.95**

(51) Int. Cl.⁶: **B01J 35/04**, B01J 35/02

(21) Anmeldenummer: **88100078.0**

(22) Anmeldetag: **05.01.88**

Die Akte enthält technische Angaben, die nach dem Eingang der Anmeldung eingereicht wurden und die nicht in dieser Patentschrift enthalten sind.

(54) **Metallischer Katalysator-Trägerkörper aus zwei unterschiedlich gewellten Blechlagen.**

(30) Priorität: **19.01.87 DE 3701356**

(43) Veröffentlichungstag der Anmeldung:
**24.08.88 Patentblatt 88/34**

(45) Bekanntmachung des Hinweises auf die Patenterteilung:
**01.07.92 Patentblatt 92/27**

(45) Bekanntmachung des Hinweises auf die Entsheidung über den Einspruch:
**05.07.95 Patentblatt 95/27**

(84) Benannte Vertragsstaaten:
**AT BE CH DE ES FR GB GR IT LI LU NL SE**

(56) Entgegenhaltungen:
**EP-A- 0 201 614**       **DE-A- 2 636 672**
**DE-A- 2 827 934**       **FR-A- 2 134 377**
**GB-A- 2 079 174**       **US-A- 2 644 777**
**US-A- 4 394 422**

(73) Patentinhaber: **Emitec Gesellschaft für Emissionstechnologie mbH**
**Hauptstrasse 150**
**D-53797 Lohmar (DE)**

(72) Erfinder: **Cyron, Theodor, Dipl.-Ing.**
**Kurt-Schumacher-Strasse 12**
**D-5060 Bergisch Gladbach 1 (DE)**

(74) Vertreter: **Kahlhöfer, Hermann Bardehle-Pagenberg-Dost-Altenburg-Frohwitter-Geissler & Partner Patent- und Rechtsanwälte et al**
**Xantener Strasse 12**
**D-40474 Düsseldorf (DE)**

EP 0 279 159 B2

Rank Xerox (UK) Business Services
(3.10/3.09/3.3.3)

## Beschreibung

Die vorliegende Erfindung betrifft einen Katalysator-Trägerkörper gemäß dem Oberbegriff des Anspruchs 1. Metallische Katalysator-Trägerkörper dieser Art werden beispielsweise in den Abgassystemen von Kraftfahrzeugen eingesetzt, vorzugsweise als sogenannte "Startkatalysatoren". Dabei sind diese Katalysator-Trägerkörper hohen thermischen Wechselbelastungen ausgesetzt, welche die Lebensdauer begrenzen.

Verschiedene Wege zur Vergrößerung der Elastizität solcher Katalysator-Trägerkörper und zur Beherrschung der Druck- und Zugkräfte sind bereits vorgeschlagen worden. Aus der DE-OS 26 36 672 ist auch schon ein Katalysator-Trägerkörper bekannt, welcher aus abwechselnden Lagen zweier unterschiedlich gewellter Bleche aufgebaut ist. Bei dieser bekannten Art der Doppelwellung, wie auch bei anderen bekannten Ausführungsformen von Doppelwellungen treten verschiedene Probleme auf. Wellungen sehr kleiner Wellenlängen sind fertigungstechnisch schwierig herzustellen und außerdem treten bei unregelmäßig übereinandergewickelten Doppelwellungen sehr unterschiedliche Größen der sich bildenden gasdurchlässigen Kanäle auf. Bei anderen Wellenlängenverhältnissen der Doppelwellungen, bei welchen sich die Zahl der Berührungsstellen zwischen den Blechlagen verringert, treten undefinierte Zwischenräume zwischen den Blechlagen auf. Dies alles führt bei der späteren Beschichtung des Katalysator-Trägerkörpers mit einer keramischen Masse und dem eigentlichen Katalysatormaterial zu Nachteilen. Entweder setzen sich Kanäle mit geringem Querschnitt und kleine Spalte zu oder es entstehen unerwünschte Keramikbrücken in kleinen Spalten, welche später bei thermischer Wechselbelastung abbröckeln.

Aufgabe der vorliegenden Erfindung ist ein elastischer, metallischer Katalysator-Trägerkörper, welcher die genannten Nachteile des Standes der Technik vermeidet. Insbesondere soll der erfindungsgemäße Katalysator-Trägerkörper eine möglichst gleichmäßige Verteilung der Kanalquerschnitte aufweisen, so daß keine Druckverluste durch zugesetzte kleine Kanäle und Spalten entstehen und auch keine keramische Beschichtung abbröckeln kann.

Zur Lösung dieser Aufgabe wird ein Katalysator-Trägerkörper mit den kennzeichnenden Merkmalen des Anspruchs 1 vorgeschlagen. Das entscheidende dieser Merkmale liegt darin, daß die beiden unterschiedlich gewellten Blechlagen solche Periodizitäten aufweisen, daß sie beim Wickeln miteinander synchronisiert werden können. Das Ergebnis ist eine sehr gleichmäßige Verteilung von aneinandergeschmiegten Berührungsstellen gleicher Krümmungsrichtung zwischen den beiden Blechen. Durch entsprechende Wahl der Form der Wellungen, der Amplituden und der Periodizitäten kann erreicht werden, daß an diesen Berührungsstellen keine Kanäle mit sehr keinem Querschnitt entstehen, sondern jeder Wellenberg der ersten Wellung nur einmal die zweite Blechlage berührt. Durch die erfindungsgemäße Wahl des Verhältnisses zwischen den Periodizitäten der beiden Blechlagen wird sichergestellt, daß zumindest sehr viele, sich aneinanderschmiegende Berührungsstellen beim Aufwickeln entstehen. Zwar läßt sich bei einer spiraligen Wicklung nicht erreichen, daß sich sowohl die Wellenberge wie die Wellentäler der ersten Lage an entsprechende Berge bzw. Täler der zweiten Lage anschmiegen, jedoch läßt sich dies zumindest für eine der beiden Seiten erreichen. Ein erfindungsgemäß hergestellter Katalysator-Trägerkörper weist trotz sehr gleichmäßiger Verteilung der Kanalquerschnitte eine hohe Elastizität auf, da sämtliche, die einzelnen Kanäle begrenzenden Flächen gekrümmt sind und sich daher relativ leicht verformen lassen. Dies ist bei den ebenfalls nach dem Stand der Technik bekannten gewickelten Katalysator-Trägerkörpern aus abwechselnden Lagen glatter und gewellter Bleche beispielsweise nicht der Fall. Beim Einbau eines solchen Katalysator-Trägerkörpers in ein Mantelrohr, welches die thermischen Dehnungen behindert, ist diese Elastizität von großem Vorteil und steigert erheblich die Lebensdauer.

Gemäß Anspruch 2 wird vorgeschlagen, daß die Wellungen durch ineinandergreifende Zahnwalzen hergestellt sein sollen. Die einfachste so herstellbare Wellenform ist eine Sinusform, es sind jedoch auch andere Wellenformen, beispielsweise mit steileren oder weniger steilen Flanken möglich. Dabei sollen sich ferner die Periodizitäten, d. h. die Wellenlängen, der beiden Wellungen wie 2 : 1 verhalten. Um die Bedingung zu erfüllen, daß ein Wellenberg der ersten Wellung die zweite Blechlage nur einmal berühren darf, darf die Amplitude der zweiten Wellung bei ansonsten gleicher Wellenform maximal halb so groß sein wie die Amplitude der ersten Wellung. Eine so große Amplitude der zweiten Wellung würde jedoch trotz der auch dann vorhandenen Vorteile der vorliegenden Erfindung immer noch zu relativ unterschiedlichen Kanalquerschnitten führen. Daher wird im Anspruch 3 vorgeschlagen, daß die Amplitude der zweiten Wellung weniger als ein Viertel der Amplitude der ersten Wellung betragen soll, vorzugsweise sogar weniger als ein Achtel. Bei dieser Ausführung reicht die Welligkeit der zweiten Blechlage noch aus, um beim Wickeln eine "Synchronisation" der beiden Wellungen zu erreichen, bewirkt aber trotz hoher Elastizität keine sehr unterschiedlichen Kanalquerschnitte im gesamten Katalysator-Trägerkörper mehr. Wie im Anspruch 4 vorgeschlagen, können die Wellenlängenverhältnisse der beiden Wellungen auch beispielsweise das Verhältnis 1 : 3 und ein Amplitudenverhältnis haben, welches größer als 1 : 3 ist. Die obigen Betrachtungen gelten analog. Allerdings sind bei einer ersten Wellung mit schon relativ kleiner Wellenlänge technische Grenzen für die kleinere zweite Wellung gesetzt.

Im Anspruch 5 wird vorgeschlagen, daß die erfindungsgemäßen Katalysator-Trägerkörper an den Stirnseiten ganz oder teilweise verlötet sein sollen. Diese nach dem Stand der Technik an sich vielfach bekannte Maßnahme führt bei der vorliegenden erfindungsgemäßen Formgebung nicht zu einer unerwünschten Versteifung der Stirnseiten, da, wie ausgeführt, alle Kanalwände zumindest leicht gewölbt und damit elastisch sind. Außerdem lassen sich die erfindungsgemäßen aneinandergeschmiegten Berührungsstellen besonders haltbar verlöten, da diese Berührungsstellen durch spitzere Winkel zwischen den Blechlagen eine größere Kapillarwirkung entfalten und daher flüssiges Lot ansaugen.

Gemäß Anspruch 6 wird ferner vorgeschlagen, daß die beim Wickeln nach innen gerichteten Wellentäler der ersten Wellung mit nach innen gerichteten Wellentälern der zweiten Wellung synchronisiert sein sollen, so daß sich dort die aneinandergeschmiegten Berührungsstellen ergeben. Dies ist beim Wickeln technisch einfacher als eine Synchronisation der nach außen gerichteten Wellenberge, da zumindest im inneren Bereich eines Katalysator-Trägerkörpers die Wellenberge deutlich größere Abstände als die Wellentäler aufweisen, da der Umfang in Höhe der Wellenberge deutlich größer als in Höhe der Wellentäler ist. Die erste Blechlage mit ihrer wesentlich größeren Amplitude kann diese Unterschiede durch geringfügige Verformung leichter ausgleichen, wenn die Synchronisation mit der zweiten Blechlage bei den Wellentälern erfolgt.

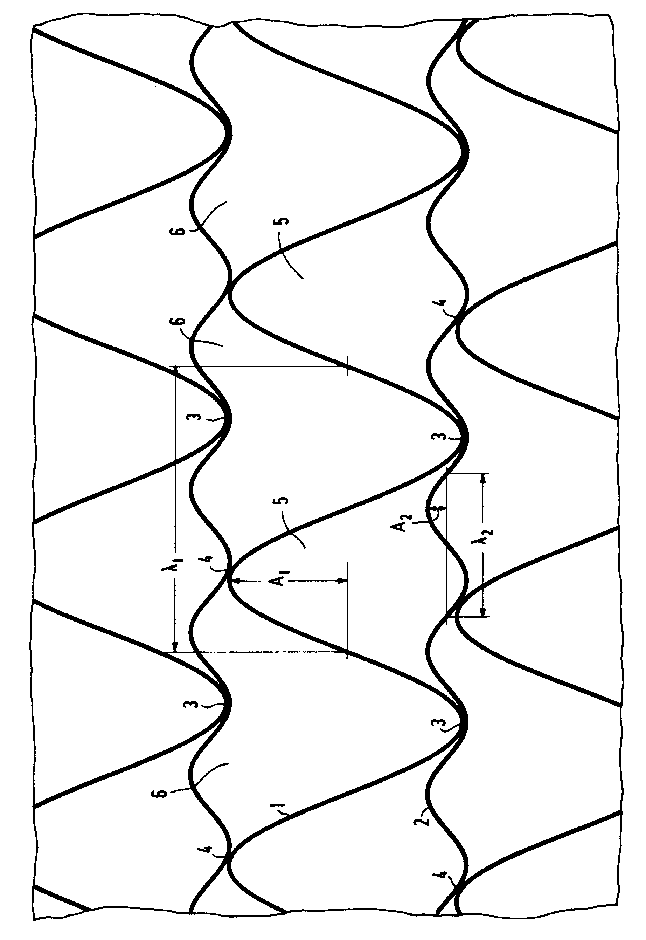

Ein Ausführungsbeispiel der Erfindung ist schematisch in der Zeichnung dargestellt. Die Zeichnung zeigt einen stark vergrößerten und begradigt dargestellten Ausschnitt aus einer Stirnansicht eines erfindungsgemäßen Katalysator-Trägerkörpers. Eine erste Blechlage 1 mit der Wellenlänge $\lambda_1$ und der Amplitude $A_1$ ist synchron mit einer zweiten Blechlage 2 mit Wellenlänge $\lambda_2$ und Amplitude $A_2$ spiralig aufgewikkelt. Im vorliegenden, bevorzugten Ausführungsbeispiel verhalten sich die Wellenlängen $\lambda_1$ zu $\lambda_2$ wie 2 : 1. Dadurch können die Wellentäler der ersten Blechlage 1 mit Wellentälern der zweiten Blechlage 2 synchronisiert aufgewickelt werden, so daß aneinandergeschmiegte Berührungsstellen 3 entstehen. Die Wellenberge der ersten Blechlage 1 werden sich im allgemeinen nicht gleichzeitig mit der Wellung der zweiten Blechlage 2 synchronisieren lassen, so daß dort unregelmäßige Berührungsstellen 4 entstehen, was jedoch die vorteilhaften Eigenschaften der erfindungsgemäßen Katalysator-Trägerkörper nicht negativ beeinflußt. Durch das gewählte Wellenlängenverhältnis ergeben sich für die einzelnen Kanäle nur geringfügig unterschiedliche Querschnitte. Die innenseitig der ersten Blechlage 1 liegenden Kanäle 5 haben im allgemeinen einen etwas geringeren Querschnitt als die außenseitig dieser Blechlage liegenden Kanäle 6. Bei anders als im vorliegenden Ausführungsbeispiel gewählten Wellenlängenverhältnissen können diese Unterschiede etwas größer oder auch geringer sein. Besonders kleine oder besonders große Querschnitte treten jedoch nicht auf, und die Verteilung der verschiedenen Querschnitte ist sehr gleichmäßig.

Erfindungsgemäße Katalysator-Trägerkörper eignen sich besonders als Startkatalysatoren für einen motornahen Einbau mit hoher thermischer Wechselbelastung und zeichnen sich durch eine große Lebensdauer aus.

**Patentansprüche**

1. Aus abwechselnden Lagen zweier unterschiedlich gewellter Bleche (1, 2) gewickelter metallischer Katalysator-Trägerkörper, wobei die eine Blechlage (1) eine einfache erste Weilung der Periodizität $\lambda_1$ und der Amplitude $A_1$ aufweist, welche hauptsächlich sie Größe der Zwischen den Blechlagen entstehenden von Gas durchströmbaren Kanäle (5, 6) bestimmt, **dadurch gekennzeichnet**, daß die beiden unterschiedlich gewellten Blechlagen (1, 2) solche Periodizitäten ($\lambda_1$, $\lambda_2$) aufweisen, daß sie beim Wikkeln miteinander synchronisiert werden können, indem die zweite Blechlage (2) eine Zweite Wellung der Periodizität $\lambda_2$ und der Amplitude $A_2$ aufweist, wobei folgende Bedingungen geiten:

   a)

   $$\lambda_2 = \frac{n \cdot \lambda_1}{m}$$

   mit n = 1, 2 oder 3
   und m = 1, 2, 3, 4, 5 oder 6 und m ≥ n, wodurch der Katalysator-Trägerkörper viele sich aneinanderschmiegende, periodisch wiederkehrende Berührungsstellen (3) gleicher Krümmungsrichtung in Wellentälern bzw auf Wellenbergen jeweils benachbarter Blechlagen (1, 2) aufweist;

   b) $A_2$ ist unter Berücksichtigung der Form und Periodizität der Wellungen mindestens so viel kleiner als $A_1$, daß die Krümmung

der ersten Blechlage (1) an diesen periodischen, sich aneinanderschmiegenden Berührungsstellen (3) etwa gleich oder etwas größer als die Krümmung der zweiten Blechlage (2) an diesen Stellen (3) ist.

2. Katalysator-Trägerkörper nach Anspruch 1, **dadurch gekennzeichnet**, daß die Wellungen vorzugsweise durch ineinandergreifende Zahnwalzen hergestellt und etwa sinusförmig sind und daß gilt,

a)
$$\lambda_2 = \frac{\lambda_1}{2} \quad \text{und}$$

b)
$$A_2 \leq \frac{A_1}{2}$$

3. Katalysator-Trägerkörper nach Anspruch 2, **dadurch gekennzeichnet**, daß gilt

$$A_2 \leq \frac{A_1}{4},$$

vorzugsweise

$$A_2 \leq \frac{A_1}{8}.$$

4. Katalysator-Trägerkörper nach Anspruch 1, **dadurch gekennzeichnet**, daß gilt:

a)
$$\lambda_2 = \frac{\lambda_1}{3}$$

b)
$$A_2 \leq \frac{A_1}{3}$$

5. Katalysator-Trägerkörper nach Anspruch 1, 2, 3 oder 4, **dadurch gekennzeichnet**, daß eine oder beide Stirnseiten des Katalysator-Trägerkörpers ganz oder teilweise an den Berührungsstellen (3, 4) zwischen den beiden Blechlagen (1, 2) verlötet sind.

6. Katalysator-Trägerkörper nach Anspruch 1, 2, 3, 4 oder 5, **dadurch gekennzeichnet**, daß die sich aneinanderschmiegenden Berührungsstellen (3) zwischen den beiden Blechlagen (1, 2) innenseitig der ersten Blechlage (1) und außenseitig der zweiten Blechlage (2) angeordnet sind.

## Claims

1. Metallic catalyst support body wound from alternating layers of two differently corrugated sheets (1, 2), wherein one sheet layer (1) has a simple first corrugation of the periodicity $\lambda_1$ and the amplitude $A_1$, which primarily determines the size of the ducts (5, 6) which occur between the sheet layers and through which gas can flow, characterized in that the two differently corrugated sheet layers (1, 2) have such periodicities ($\lambda_1$, $\lambda_2$) that they can be synchronized with one another during winding, in that the second sheet layer (2) has a second corrugation of the periodicity $\lambda_2$ and the amplitude $A_2$, whereby the following conditions apply:

   a)
   $$\lambda_2 = \frac{n \cdot \lambda_1}{m}$$

   with n = 1, 2 or 3
   and m = 1, 2, 3, 4, 5 or 6 and
   $m \geq n$, whereby the catalyst support body has many closely joined, periodically recurring contact points (3) of the same curvature direction at corrugation peaks or corrugation troughs respectively of respectively adjacent sheet layers (1, 2);
   b) considering the form and periodicity of the corrugations, $A_2$ is at least so much smaller than $A_1$ that the curvature of the first sheet layer (1) at these periodical closely joined contact points (3) is approximately the same as or somewhat larger than the curvature of the second sheet layer (2) at these points (3).

2. Catalyst support body according to claim 1, characterized in that the corrugations are preferably manufactured by toothed rollers engaging into one another and are approximately sinusoidal and that the following applies:

a)
$$\lambda_2 = \frac{\lambda_1}{2} \quad \text{and}$$

b)
$$A_2 \leq \frac{A_1}{2} \quad .$$

3. Catalyst support body according to claim 2, characterized in that

$$A_2 \leq \frac{A_1}{4}$$

applies, preferably

$$A_2 \leq \frac{A_1}{8} \quad .$$

4. Catalyst support body according to claim 1, characterized in that the following applies:

a)
$$\lambda_2 = \frac{\lambda_1}{3}$$

b)
$$A_2 \leq \frac{A_1}{3} \quad .$$

5. Catalyst support body according to claim 1, 2, 3 or 4, characterized in that one or both faces of the catalyst support body are brazed totally or partially at the contact points (3, 4) between the two sheet layers (1, 2).

6. Catalyst support body according to claim 1, 2, 3, 4 or 5, characterized in that the closely joined contact points (3) are arranged between the two sheet layers (1, 2) on the inside of the first sheet layer (1) and on the outside of the second sheet layer (2).

**Revendications**

1. Corps métallique servant de support de catalyseur et obtenu en enroulant des couches alternées de tôles (1, 2) ondulées de manière différente, une couche de tôle (1) comportant une première ondulation simple de périodicité $\lambda_1$ et d'amplitude $A_1$, qui définit principalement la dimension des canaux (5, 6) créés entre les couches de tôle et dans lesquels peut passer du gaz, caractérisé en ce que les deux couches de tôle (1, 2) ondulées différemment présentent des périodicités $\lambda_1$, $\lambda_2$ telles qu'elles peuvent être synchronisées l'une à l'autre lors de l'enroulement, la seconde couche de tôle (2) présentant une seconde ondulation de périodicité $\lambda_2$ et d'amplitude $A_2$ et les conditions suivantes étant satisfaites :
   a)

$$\lambda_2 = \frac{n \cdot \lambda_1}{m}$$

avec n = 1, 2 ou 3
et m = 1,2,3,4,5 ou 6 et m ≥ n,
le corps servant de support de catalyseur présentant plusieurs points de contact (3) de même sens de courbure récurrents périodiquement et en osculation aux sommets des ondulations respectivement aux creux des ondulations des couches de tôles (1,2) respectivement voisines;
   b) $A_2$ est, en tenant compte de la forme et de la périodicité des ondulations, au moins si inférieur à $A_1$ que la courbure de la première couche de tôle (1) en ses points de contact périodiques et en osculation est sensiblement égale ou supérieure à la courbure de la seconde couche de tôle (2) en ses points (3).

2. Corps servant de support de catalyseur suivant la revendication 1, caractérisé en ce que les ondulations sont obtenues, de préférence, par des cylindres dentés s'interpénétrant et ont une forme sensiblement sinusoïdale, les conditions suivantes étant satisfaites,

a)
$$\lambda_2 = \frac{\lambda_1}{2} \quad et$$

b)
$$A_2 \leq \frac{A_1}{2}$$

3. Corps servant de support de catalyseur suivant la revendication 2, caractérisé en ce que la condition suivante est satisfaite,

$$A_2 \leq \frac{A_1}{4} \quad ,$$

de préférence

$$A_2 \leq \frac{A_1}{8}$$

4. Corps servant de support de catalyseur suivant la revendication 1, caractérisé en ce que les conditions suivantes sont satisfaites,

a)
$$\lambda_2 = \frac{\lambda_1}{3}$$

b)
$$A_2 \leq \frac{A_1}{3}$$

5. Corps servant de support de catalyseur suivant la revendication 1, 2, 3 ou 4, caractérisé en ce que l'une ou les deux surfaces frontales du corps servant de support de catalyseur sont brasées en tout ou partie aux points de contact (3, 4) entre les deux couches de tôle (1, 2).

6. Corps servant de support de catalyseur suivant la revendication 1, 2, 3, 4 ou 5, caractérisé en ce que les points de contact (3) en osculation, compris entre les deux couches de tôle (1, 2), sont disposés du côté intérieur de la première couche de tôle (1) et du côté extérieur de la seconde couche de tôle (2).